# FASCICULE DE BREVET EUROPEEN

(11) **EP 0 690 252 B1**
(45) Date de publication et mention de la délivrance du brevet: **29.12.1999**
(21) Numéro de dépôt: 95401412.2
(22) Date de dépôt: 16.06.1995
(51) Int. Cl.: F16J 15/12

(54) **Procédé de fabrication de joint composite métal-élastomère comportant au moins une armature en tôle d'acier électrozinguée entre deux couches d'élastomère**
Verfahren zur Herstellung einer Metall Elastomer Verbunddichtung mit mindestens einem elektroverzinktem Blech zwischen zwei Elastomer-Schichten
Method for manufacturing a metal-elastomer composite seal with at least one zinc electroplated metal sheet between two elastomer layers

(30) Priorité: 28.06.1994 FR 9408048
(43) Date de publication de la demande: 03.01.1996
(73) Titulaire: ETILAM, 52100 St. Dizier (FR)
(72) Inventeur: Turci, Serge, F-57290 - Metzeresche (FR)
(74) Mandataire: Ventavoli, Roger

(56) Documents cités:
- EP-A- 0 320 287
- US-A- 5 110 630
- US-A- 5 154 977

## Description

La présente invention est relative à un procédé de fabrication de joint composite métal-élastomère pour des applications haute pression, du type comportant au moins une armature en tôle d'acier électrozingué entre deux couches d'élastomère.

On connaît un procédé de fabrication de joint du type précité dans lequel, voir par exemple US-A-5 110 630,:
- on découpe et on met en forme une tôle d'acier électrozingué pour servir d'armature au joint à fabriquer,
- on nettoie et on traite la surface inférieure et supérieure de ladite armature, notamment par phosphatation et/ou par chromatation,
- on revêt lesdites surfaces inférieure et supérieure de ladite armature d'une couche épaisse d'élastomère, notamment par enduction d'un élastomère liquide non totalement polymérisé et par traitement thermique de cuisson dudit élastomère.

Ledit traitement thermique de cuisson est généralement effectué à une température supérieure ou égale à 180°C

On a constaté que ce procédé connu de fabrication de joints présentait plusieurs inconvénients :
- un tel joint, obtenu par le procédé de fabrication connu décrit ci-dessus, et utilisé notamment dans un circuit d'eau de refroidissement, présente une résistance insuffisante à la corrosion à l'eau du circuit de refroidissement : en effet, la couche d'électrozingage, qui recouvre la tôle d'acier qui sert d'armature au joint, s'effrite à la suite du traitement thermique de cuisson de l'élastomère, notamment à une température supérieure à 180°C, effectué lors de la fabrication du joint et ladite couche d'électrozingage n'offre plus une résistance suffisante à la corrosion.
- les traitements de surface de la tôle électrozinguée découpée et mise en forme, qui comportent une phosphatation et/ou une chromatation, sont polluants et les effluents qu'ils entraînent nécessitent des traitements coûteux.

L'invention a pour but d'améliorer la résistance à la corrosion de joints composites métal-élastomère et de diminuer sensiblement les risques de pollution et/ou les coûts de traitement d'effluents lors de la fabrication de tels joints.

A cet effet, l'invention a pour objet un procédé de fabrication de joint composite métal-élastomère pour des applications haute pression, du type comportant au moins une armature en tôle d'acier électrozingué entre deux couches d'élastomère, caractérisé en ce que :
- on revêt une tôle électrozinguée d'un film mince à base de polymère sur ses deux faces,
- on découpe et on met en forme ladite tôle d'acier électrozingué ainsi revêtue pour servir d'armature au joint à fabriquer,
- on revêt les deux faces de ladite armature d'une couche d'élastomère, notamment par enduction d'un élastomère liquide non totalement polymérisé,
- on effectue un traitement thermique de cuisson dudit élastomère.

Le procédé selon l'invention peut en outre comporter les caractéristiques suivantes :
- ledit revêtement d'un film mince à base de polymère est effectué en ligne, directement après l'électrozingage de ladite tôle.
- ledit film à base de polymère est obtenu par enduction et séchage d'un liquide d'enduction contenant ledit polymère en suspension et au moins 0,1% en poids d'acide phosphorique.
- ledit liquide d'enduction contient au moins 0,5% en poids d'acide chromique (exprimé en CrO3).

L'invention a encore pour objet une tôle d'acier électrozinguée revêtue sur ses deux faces d'un film uniforme à base de polymère caractérisée en ce que ledit film contient plus de 1% en poids de composés phosphates (exprimé en PO4).

La tôle selon l'invention peut en outre présenter les caractéristiques suivantes :
- ledit polymère est à base de polymère acrylique.
- ledit film contient plus de 1% en poids de composé à base de chrome à l'état d'oxydation +VI (exprimé en Cr).
- la charge de revêtement dudit film est comprise entre 0,4 et 0,6 g/m2, et de préférence égale à 0,5 g/m2.

L'invention a encore pour objet l'utilisation d'une telle tôle selon l'invention pour la fabrication d'un joint composite métal-élastomère pour des applications haute pression, du type comportant au moins une armature en tôle d'acier électrozingué entre deux plaques d'élastomère.

L'invention a encore pour objet l'utilisation d'un joint composite métal-élastomère selon l'invention comme joint de culasse dans un moteur à combustion interne.

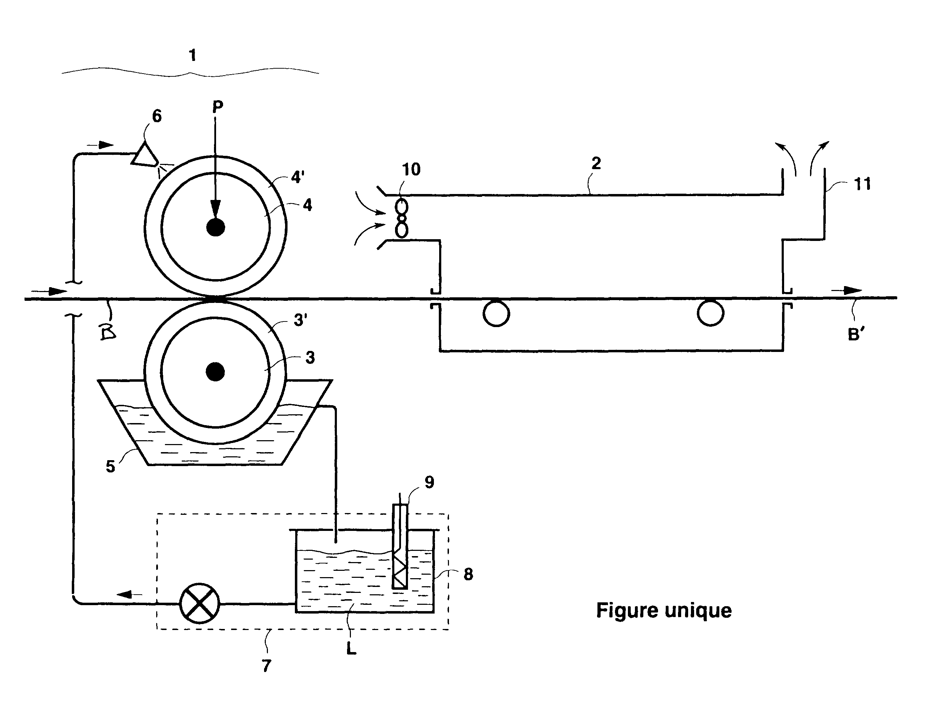

L'invention sera mieux comprise à la lecture de la description qui va suivre, donnée à titre d'exemple et en référence à la figure unique qui représente un schéma des moyens de dépôt en continu d'un film à base de polymère sur une tôle.

L'installation de fabrication de joint composite métal-polymère comprend des moyens de dépôt en continu d'un film à base de polymère sur une tôle, des moyens de découpe et de mise en forme de tôle et des moyens de préparation de couches d'élastomère sur un substrat métallique.

Les moyens de dépôt en continu d'un film à base de polymère sur une tôle sont représentés à la figure unique et comprennent une machine d'enduction 1 et un tunnel de séchage 2.

La machine d'enduction 1 de liquide sur une tôle comprend un rouleau encreur inférieur 3 et un rouleau encreur supérieur 4 superposés à axes parallèles, à rotation libre, et appuyés l'un contre l'autre, des moyens de mise en pression d'un des rouleaux encreurs contre l'autre, un bac-encrier 5 dans lequel trempe le rouleau encreur inférieur, des moyens d'arrosage du rouleau encreur supérieur 6, des moyens de recirculation 7 dudit liquide d'enduction comprenant un réservoir 8 et des moyens de maintien en température 9 dudit liquide d'enduction.

Les deux dits rouleaux encreurs, inférieur 3 et supérieur 4, sont des cylindres métalliques dont les surfaces externes sont uniformément recouvertes d'une enveloppe élastomère 3', 4' d'une dureté avantageusement comprise entre 40 et 45 Shores la dite enveloppe élastomère 3', 4' présente par exemple une épaisseur comprise entre 10 et 20 mm, et est à base de polyéthylène et/ou de polypropylène.

Avantageusement, la rugosité de la surface de l'enveloppe 4' du cylindre encreur supérieur, qui est arrosé par les moyens d'arrosage 6, est comprise entre 1 et 2 micromètres.

Avantageusement, la rugosité de la surface de l'enveloppe 3' du cylindre encreur inférieur, qui trempe dans le bac-encrier 5, est comprise entre 2 et 3 micromètres.

Les moyens de mise en pression d'un des rouleaux encreurs contre l'autre sont d'un type connu en lui-même et ne sont pas représentés ici en détail ils appliquent par exemple un pression P sur l'axe du rouleau encreur supérieur vers l'axe du rouleau encreur inférieur 3 tel que représenté à la Figure unique.

Le tunnel de séchage 2 est d'un type connu en lui-même et n'est pas écrit ici en détail ; il est doté de moyens de ventilation comportant un ventilateur 10 et une cheminée d'extraction 11.

Sans se départir de la présente invention, on peut utiliser d'autres moyens connus de dépôt en continu d'un film à base de polymère sur une tôle.

Les moyens de découpe et de mise en forme de tôle et les moyens de préparation de couches d'élastomère sur un substrat métallique sont d'un type connu en eux-mêmes et ne sont pas représentés ici.

On va maintenant décrire la mise en oeuvre du procédé selon l'invention à l'aide de l'installation de fabrication de joints composites métal-polymère décrite ci-dessus.

On prend une bande B de tôle d'acier électrozinguée ; l'épaisseur du revêtement de zinc recouvrant les deux faces de la tôle est par exemple comprise entre 1 et 10 micromètres sur chaque face et l'épaisseur totale de la tôle est par exemple comprise entre 0,1 et 1,5 millimètres.

On remplit le réservoir 8 de la machine d'enduction 1 d'un liquide d'enduction L.

Ledit liquide d'enduction L est avantageusement une dispersion aqueuse stable de particules de copolymères acryliques qui contient plus de 0,5% en poids d'acide phosphorique en solution (exprimé en H3PO4).

Selon une variante de l'invention, ledit liquide d'enduction L contient plus de 0,5% en poids d'acide chromique en solution (exprimé en CrO3).

Comme le liquide d'enduction L est aqueux, les acides phosphorique et chromique y sont largement solubles et peuvent donc y être intégrés, ce qui permet d'éviter avantageusement une étape préalable de préparation de la tôle zinguée, notamment par phosphatation et chromatation.

Grâce aux moyens de recirculation 7 dudit liquide d'enduction L , on maintient rempli le bac-encrier 5 dans lequel trempe le rouleau encreur inférieur 3 et on arrose en permanence à l'aide des moyens d'arrosage 6 la surface du rouleau encreur supérieur 3.

Grâce aux moyens de mise en pression, on applique une pression P entre les deux rouleaux encreurs 3, 4 l'un contre l'autre le long d'une génératrice.

On revêt ladite bande de tôle d'acier électrozinguée B d'un film mince de polymère simultanément sur ses deux faces, inférieure et supérieure, en faisant passer ladite bande de tôle d'acier électrozinguée B dans les moyens de dépôt en continu d'un film polymère, successivement dans la machine d'enduction 1 entre les deux rouleaux encreurs 3, 4 et dans le tunnel de séchage 2.

On règle les paramètres d'enduction et de séchage, en particulier la concentration des composants du liquide d'enduction L, la température du liquide d'enduction L, la pression des rouleaux encreurs P, le temps et la température de séchage et le débit de ventilation du tunnel de séchage, pour obtenir sur les deux faces de la tôle d'acier électrozinguée le dépôt d'un film sec à base de polymère présentant une charge de revêtement comprise entre 0,4 et 0,6 grammes par mètre carré et par face, de préférence égale à 0,5 gramme par mètre carré et par face.

Lors du séchage, la température de la tôle n'atteint pas 180°C, de sorte qu'on évite toute dégradation de la couche d'électrozingage, ce qui est particulièrement avantageux par rapport au dépôt de films thermodurs, notamment phénoliques, qui nécessitent généralement une cuisson à température supérieure ou égale à 200°C.

Grâce aux moyens et aux paramètres d'enduction et de séchage du procédé selon l'invention, et, en particulier, à la dureté et à la rugosité des rouleaux encreurs 3, 4, à la pression P des rouleaux encreurs contre la bande d'acier à revêtir, on obtient un film de revêtement mince et uniforme à base de polymère qui confère à la tôle d'acier électrozinguée ainsi revêtue B' un aspect satiné et brillant.

Ledit film contient plus de 1% en poids de composés phosphates (exprimé en PO4).

De préférence, ledit film contient en outre plus de 1% de composé à base de chrome à l'état d'oxydation +VI (exprimé en Cr).

Sans se départir de la présente invention, en utilisant d'autres moyens connus de dépôt en continu de film à base de polymère sur une tôle, on peut déposer sur la tôle d'acier électrozinguée B un film mince et uniforme à base de polymère, contenant plus de 1% en poids de composés phosphates (exprimé en PO4).

De préférence, ledit polymère est à base de polymère acrylique, notamment quand l'élastomère de revêtement final est à base d'acrylonitriles butadiène.

De préférence, ledit film mince et uniforme contient plus de 1% de composé à base de chrome à l'état d'oxydation +VI (exprimé en Cr) et/ou est déposé avec une charge de révêtement comprise entre 0,4 et 0,6 grammes par mètre carré et par face.

La tôle d'acier électrozinguée ainsi revêtue selon l'invention présente un aspect satiné et brillant.

Selon une variante préférée de l'invention, on effectue le revêtement de ladite bande de tôle d'acier électrozinguée d'un film mince à base de polymère immédiatement à la suite de l'opération d'électrozingage de la bande de tôle d'acier.

Avantageusement, la bande de tôle d'acier électrozinguée ainsi revêtue d'un film à base de polymère peut être stockée et constitue alors un produit intermédiaire pour la fabrication de joints composites métal-polymère.

Grâce à son revêtement de film polymère, ledit produit intermédiaire ne risque pas d'être marqué par des traces de doigts.

A l'aide des moyens de découpe et de mise en forme de tôle, on découpe et on met en forme ledit produit intermédiaire pour servir d'armature au joint à fabriquer.

Grâce au revêtement du film mince à base de polymère du produit intermédiaire selon l'invention, il ne se produit aucune poussière de zinc à la découpe et le coefficient de frottement de ladite armature sur les outils de mise en forme est diminué, ce qui facilite l'opération de mise en forme.

A l'aide des moyens de préparation de plaques d'élastomère sur un substrat métallique, on dépose sur les deux faces de ladite armature une couche d'élastomère, notamment par enduction d'un élastomère liquide non totalement polymérisé suivi d'un traitement thermique de cuisson dudit élastomère.

De préférence, ledit élastomère est de type acrylonitrile butadiène.

Ainsi, grâce à l'opération de revêtement du film mince à base de polymère selon l'invention, il n'est plus nécessaire d'effectuer un traitement de phosphatation et de chromatation de ladite armature avant le dépôt d'une couche d'élastomère et on évite tout risque de pollution et des traitements d'effluents.

La demanderesse a constaté avec surprise que les joints composites métal-élastomère obtenus par le procédé selon l'invention présentent une meilleure résistance à la corrosion et une meilleure adhérence des couches d'élastomères à l'armature par rapport à ceux réalisés selon le procédé de l'art antérieur comprenant une étape de phosphatation et de chromatation de l'armature avant le dépôt d'une couche d'élastomère.

Ainsi l'utilisation de tôle d'acier électrozinguée revêtue d'un film à base de polymère selon l'invention pour servir d'armature à des joints composites métal-élastomère est particulièrement avantageuse puisqu'elle évite, lors de la fabrication de tels joints, les traitements de phosphatation et de chromatation qui présentent des risques de pollution et puisque l'adhérence du polymère au métal et la résistance à la corrosion de l'armature sont améliorées grâce au film à base de polymère.

Grâce aux avantages indiqués ci-dessus, les joints métal-élastomère obtenus à partir du procédé selon l'invention, ou fabriqués à partir de tôles électrozinguées revêtues d'un film polymère selon l'invention, servent avantageusement comme joints de culasse dans les moteurs à combustion interne.

### ESSAI n°1 :

On prépare un liquide d'enduction ayant la composition pondérale suivante : eau : 55,9 % - copolymères acryliques dispersés : 34 % - H3PO4 : 5,8 % - CrO3 : 4,3 % ; la taille moyenne des particules solides de polymère en suspension stable est comprise entre 0,1 et 0,2 micromètre.

On remplit le réservoir 8 de la machine d'enduction 1 dudit liquide, qui, grâce aux moyens de recirculation, arrose le rouleau encreur supérieur 4 et baigne le rouleau encreur inférieur 5.

La pression P entre les rouleaux est établie à 3,5 kg/m grâce aux moyens de mise en pression, et la température du liquide est fixée à 35°C grâce aux moyens de maintien en température 9.

Le tunnel de séchage 2 présente ici une longueur de 1,5 m ; on règle sa température à 120°C et le débit de ventilation à 15 m3/minute.

On prend une bande de tôle d'acier, on dépose en continu par électrolyse un revêtement de zinc d'épaisseur de environ 4 microns sur chaque face de ladite bande de tôle, on rince en ligne ladite bande par immersion dans de l'eau bipermutée et on revêt toujours en ligne ladite bande de tôle d'acier électrozinguée d'un film mince de polymère simultanément sur les deux faces, inférieure et supérieure, en faisant passer ladite bande de tôle d'acier électrozinguée successivement dans la machine d'enduction entre les deux rouleaux encreurs et dans le tunnel de séchage pendant environ 2 secondes.

On obtient une bande de tôle électrozinguée revêtue sur ses deux faces d'un film polymère polyacrylique d'une épaisseur correspondant à une charge de 0,5 g/m2 présentant la composition suivante : Cr total : 40 mg/m2 - PO4 : 150 mg/m2 - polymère : 310 mg/m2.

La bande de tôle ainsi revêtue présente un aspect satiné et brillant.

La bande de tôle électrozinguée revêtue sur ses deux faces du film polymère est ensuite découpée et mise en forme pour servir d'armature à un joint composite métal-élastomère sans traitement préalable de phosphatation ni de chromatation, on dépose sur les deux faces de ladite armature une couche d'élastomère, notamment par enduction d'un élastomère liquide non totalement polymérisé suivi d'un traitement thermique de cuisson dudit élastomère à une température supérieure à 180 ° C.

On obtient ainsi un joint composite métal-élastomère sans risque de pollution ni problèmes de traitement d'effluents de phosphatation ou de chromatation.

Malgré le traitement thermique de cuisson de l'élastomère, et même quand ce traitement dépasse 180°C, la tenue à la corrosion par les brouillards salins, mesurée selon la norme AFNOR 41002, dudit joint composite est ici 5 fois supérieure à celle de joints composites fabriqués selon l'art antérieur sans revêtement de film polymère de l'armature mais avec un traitement de préparation de l'armature par phosphatation et chromatation.

## Revendications

1. Procédé de fabrication de joint composite métal-élastomère pour des applications haute pression, du type comportant au moins une armature en tôle d'acier électrozinguée entre deux couches d'élastomère, caractérisé en ce que :
- on revêt une tôle électrozinguée (B) d'un film mince à base de polymère sur ses deux faces,
- on découpe et on met en forme ladite tôle d'acier électrozinguée ainsi revêtue (B') pour servir d'armature au joint à fabriquer,
- on revêt les deux faces de ladite armature d'une couche d'élastomère, notamment par enduction d'un élastomère liquide non totalement polymérisé,
- on effectue un traitement thermique de cuisson dudit élastomère.

2. Procédé selon la revendication 1 caractérisé en ce que ledit revêtement d'un film mince à base de polymère est effectué en ligne, directement après l'électrozingage de ladite tôle.

3. Procédé selon l'une quelconque des revendications 1 ou 2 caractérisé en ce que ledit film à base de polymère est obtenu par enduction et séchage d'un liquide d'enduction (L) contenant ledit polymère en suspension et au moins 0,1% en poids d'acide phosphorique.

4. Procédé selon la revendication 3 caractérisé en ce que ledit liquide d'enduction (L) contient au moins 0,5% en poids d'acide chromique (exprimé en CrO3).

5. Tôle d'acier électrozinguée revêtue sur ses deux faces d'un film uniforme à base de polymère caractérisée en ce que ledit film contient plus de 1% en poids de composés phosphates (exprimé en PO4).

6. Tôle selon la revendication 5 caractérisée en ce que ledit polymère est à base de polymère acrylique.

7. Tôle selon l'une quelconque des revendications 5 ou 6 caractérisée en ce que ledit film contient plus de 1% en poids de composé à base de chrome à l'état d'oxydation +VI (exprimé en Cr).

8. Tôle selon l'une quelconque des revendications 5 à 7 caractérisée en ce que la charge de revêtement dudit film est comprise entre 0,4 et 0,6 g/m2, et de préférence égale à 0,5 g/m2.

9. Utilisation d'une tôle électrozinguée selon l'une quelconque des revendications 5 à 8 pour la fabrication d'un joint composite métal-élastomère pour des applications haute pression, du type comportant au moins une armature en tôle d'acier électrozinguée entre deux plaques d'élastomère.

10. Utilisation d'un joint composite métal-élastomère selon l'une quelconque des revendications 1 à 4 ou 9 comme joint de culasse dans un moteur à combustion interne.

## Claims

1. Process for manufacturing a metal-elastomer composite seal for high-pressure applications, of the type which includes at least one reinforcing member made of electrogalvanized steel sheet between two layers of elastomer, characterized in that:
- an electrogalvanized sheet (B) is coated with a thin polymer-based film on both its sides;
- the said electrogalvanized steel sheet thus coated (B') is cut and shaped in order to serve as a reinforcing member for the seal to be manufactured;
- both sides of the said reinforcing member are coated with a layer of elastomer, especially by coating it with a liquid elastomer which is not fully cured;
- the said elastomer is subjected to a curing heat treatment.

2. Process according to Claim 1, characterized in that the said coating with a polymer-based film is carried out in line, directly after electrogalvanizing the said sheet.

3. Process according to either of Claims 1 and 2, characterized in that the said polymer-based film is obtained by coating and drying a coating liquid (L) containing the said polymer in suspension and at least 0.1% by weight of phosphoric acid.

4. Process according to Claim 3, characterized in that the said coating liquid (L) contains at least 0.5% by weight of chromic acid (expressed as CrO₃).

5. Electrogalvanized steel sheet coated on both its sides with a uniform polymer-based film, characterized in that the said film contains more than 1% by weight of phosphate compounds (expressed as PO₄).

6. Sheet according to Claim 5, characterized in that the said polymer is based on an acrylic polymer.

7. Sheet according to either of Claims 5 and 6, characterized in that the said film contains more than 1% by weight of a compound based on chromium in the oxidation state +VI (expressed as Cr).

8. Sheet according to any one of Claims 5 to 7, characterized in that the coating weight of the said film is between 0.4 and 0.6 g/m², and preferably equal to 0.5 g/m².

9. Use of an electrogalvanized sheet according to any one of Claims 5 to 8 for the manufacture of a metal-elastomer composite seal for high-pressure applications, of the type which includes at least one reinforcing member made of electrogalvanized steel sheet between two sheets of elastomer.

10. Use of a metal-elastomer composite seal according to any one of Claims 1 to 4 or 9 as a cylinder-head seal in an internal-combustion engine.

## Patentansprüche

1. Verfahren zur Herstellung einer Metall-Elastomer-Verbunddichtung für Hochdruckanwendungen des Typs, welcher wenigstens eine Armierung aus einem elektroverzinkten Stahlblech zwischen zwei Elastomerschichten umfaßt, dadurch gekennzeichnet, daß
- man ein elektroverzinktes Blech (B) mit einer dünnen Schicht auf Polymerbasis beschichtet,
- das besagte, elektroverzinkte Stahlblech (B') zu der herzustellenden Verbindungsarmierung schneidet und verformt,
- die beiden Seiten der besagten Struktur mit einer Elastomerschicht beschichtet, insbesondere durch Auftragen eines nicht vollständig polymerisierten flüssigen Elastomeren, und
- eine Wärmebehandlung zur Aushärtung des besagten Elastomeren durchführt.

2. Verfahren nach Anspruch 1, dadurch gekennzeichnet, daß die besagte Beschichtung mit einem dünnen Film auf Polymerbasis in Reihe direkt nach dem Elektroverzinken des besagten Blechs durchgeführt wird.

3. Verfahren nach einem der Ansprüche 1 oder 2, dadurch gekennzeichnet, daß der besagte Film auf Polymerbasis durch Auftragen und Trocknen eines flüssigen Überzugs (L) erhalten wird, welcher das besagte Polymere in Suspension und wenigstens 0,1 Gew.-% Phosphorsäure enthält.

4. Verfahren nach Anspruch 3, dadurch gekennzeichnet, daß der besagte flüssige Überzug (L) wenigstens 0,5 Gew.-% Chromsäure (als CrO₃ ausgedrückt) enthält.

5. Elektroverzinktes Stahlblech, das an seinen beiden Seiten mit einem gleichmäßigen Film auf Polymerbasis beschichtet ist, dadurch gekennzeichnet, daß der besagte Film mehr als 1 Gew.-% Phosphatverbindungen (ausgedrückt in PO₄) enthält.

6. Blech nach Anspruch 5, dadurch gekennzeichnet, daß das besagte Polymere ein Polymeres auf der Basis eines Acrylpolymeren ist.

7. Blech nach einem der Ansprüche 5 oder 6, dadurch gekennzeichnet, daß der besagte Film mehr als 1 Gew.-% einer Verbindung auf der Basis von Chrom im +VI-Oxidationszustand (ausgedrückt in Cr) ist.

8. Blech nach einem der Ansprüche 5 bis 7, dadurch gekennzeichnet, daß die Beschichtung mit dem besagten Film zwischen 0,4 und 0,6 g/m², vorzugsweise 0,5 g/m² beträgt.

9. Verwendung eines elektroverzinkten Blechs nach einem der Ansprüche 5 bis 8 zur Herstellung einer Metall-Elastomer-Verbunddichtung für Hochdruckanwendungen des Typs, der wenigstens eine elektroverzinkte Stahlblechstruktur zwischen zwei Elastomerenplatten aufweist.

10. Verwendung der Metall-Elastomer-Verbunddichtung nach einem der Ansprüche 1 bis 4 oder 9 als Zylinderkopfdichtung in einem Verbrennungsmotor.
